# EUROPEAN PATENT APPLICATION

(11) **EP 4 549 607 A1**
(43) Date of publication of application: **07.05.2025**
(21) Application number: 23830477.8
(22) Date of filing: 30.06.2023
(51) Int. Cl.: C22C 38/02, C22C 38/04, C22C 38/06, C23C 2/06, C21D 8/02

(54) **100 KG-GRADE ULTRAHIGH-STRENGTH GALVANIZED STEEL SHEET AND MANUFACTURING METHOD THEREFOR**

(30) Priority: 30.06.2022 CN 202210759473
(71) Applicant: BAOSHAN IRON & STEEL CO., LTD., Shanghai 201900 (CN)
(72) Inventor: CHEN, Meng, Shanghai 201900 (CN); ZHONG, Yong, Shanghai 201900 (CN); BI, Wenzhen, Shanghai 201900 (CN); WANG, Li, Shanghai 201900 (CN)
(74) Representative: Kuhnen & Wacker Patent- und Rechtsanwaltsbüro PartG mbB
(86) International application number: PCT/CN2023/104377
(87) International publication number: WO 2024/002313

(57) **Abstract**

The present invention provides a 100 kg-grade ultra-high-strength galvanized steel sheet having excellent resistance spot welding properties and excellent resistance to liquid metal embrittlement (LME) cracking. The steel sheet contains the following components in percentage by weight: C: 0.17-0.25%, Mn: 1.7-2.7%, Si: 0.35-1.5%, Al: 0.01-1.0%, 0.7%≤Si+Al≤1.7%, and at least one of Nb, Ti and B, with the balance being Fe and unavoidable impurities. When the thickness of the steel sheet is t, the resistivity thereof is 0<R₁≤50µΩ·cm; and, in the direction from the coating layer/steel sheet substrate interface to the steel sheet substrate, when the thickness of the steel sheet is in the range of greater than or equal to 0.010t to less than or equal to 0.035t the resistivity thereof is 0<R₂≤15µΩ·cm, and when the thickness of the steel sheet is in the range of greater than 0.035t to less than or equal to 0.065t the resistivity thereof is 0<R₃≤30µΩ·cm, wherein (R₂/2+R₃/3)≤(3.1R₁^{1/2}-1.5) is satisfied.

## Description

### Technical Field

The present disclosure relates to an ultra-high strength galvanized steel plate and a manufacturing method thereof, in particular to a 100 Kg grade ultrahigh strength galvanized steel plate having excellent resistance spot welding performance and a manufacturing method thereof.

### Background Art

At present, in the background of reducing energy consumption and pollutant emissions, the lightweight and corrosion resistance of automobile bodies are being pursued. At present, high-strength steel plates are widely used on car bodies in order to reduce the thickness of body materials. High-strength steels with a tensile strength of ≥ 780MPa are usually referred to as ultra-high-strength steels. Ultra-high strength steels generally use the phase change strengthening mechanism to improve the strength of the material, and compared with low-strength grades, ultra-high strength steels are also added with more contents of alloying elements or more types of alloying elements, such as Mn, Si, Al, Cr, Mo, Nb, Ti, V, etc. In order to improve corrosion resistance, the surface of ultra-high-strength steel is coated with pure zinc (Gl) or alloyed galvanized (GA). Resistance spot welding with pure zinc (Gl) or alloyed galvanized (GA) coating on surface is a common welding method in the automotive industry.

For ultra-high-strength steel with a plating layer, there is a phenomenon called liquid metal embrittlement (LME) in the resistance spot welding process, which is mainly due to the action of stress, the zinc on the surface of the material is heated and melted, and the liquid zinc penetrates along the grain boundary of the steel plate substrate, resulting in the decline of grain boundary adhesion and cracking. LME is mainly affected by the state of the base metal, the state of the plating layer and the welding process, wherein the state of the base metal includes but is not limited to carbon equivalent, strength, resistivity, microstructure, etc., the state of the plating layer includes but is not limited to the composition of the plating layer, the weight of the plating layer, etc., and the welding process includes but is not limited to stress, welding pressure, welding current, welding time, etc. In the welding process, the higher the strength of the material, the greater the tensile stress of the welded joint under the same welding conditions. With the increase of welding current, welding splashing is more likely to occur. These factors will increase the probability of LME problems, increase the risk of welded joint failure. Compared with non-high-strength steel, ultra-high strength galvanized steel is more likely to cause LME problems, and there will be potential safety hazards in the manufacture of car body, which seriously restricts the wide application of such materials in body lightweight.

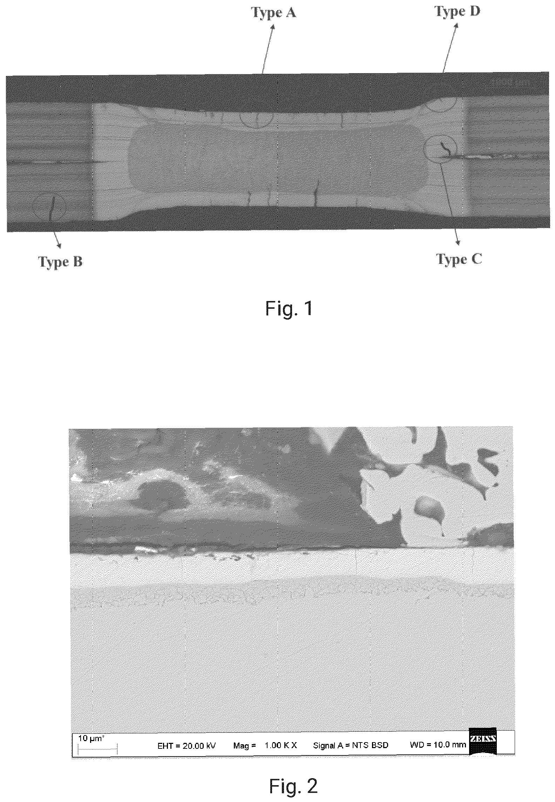

According to industry research, LME cracks in resistance spot welding are generally divided into four types, namely Type A, Type B, Type C and Type D, according to different locations of occurrence, as shown in Figure 1. Among them, Type A is the crack generated at the direct contact position between the electrode and the material, which has been shown to have little impact on the performance of the welded joint. Type B and Type C are the cracks generated on and between the base metals, and Type D is the crack generated at the shoulder position of welded point, which all have an impact on the performance of the welded joint, and thus its number and length need to be controlled. In this regard, the following research is also proposed.

For example, the U.S. patent document with an issue number US11299793B2 and titled "Steel sheet having excellent resistance to liquid metal embrittlement cracks and method for manufacturing the same" proposes a galvanized steel sheet with excellent resistance to liquid metal embrittlement cracks and a manufacturing method thereof. Its composition is as follows by weight percentage: C: 0.04~0.35%, Al+Si: 0.99% or less, Mn: 3.5-10%, P: 0.05% or less (0% excluded), S: 0.02% or less (0% excluded), N: 0.02% or less (0% excluded), with a balance of Fe and other unavoidable impurities. By volume fraction, the microstructure contains 10% or more of residual austenite, 60% or more of annealed martensite, 20% or less of a martensite and ε martensite, and the average thickness of the Mn depletion layer is from the surface of the product to 0.5 µm or more. This invention has a high Mn content and is suitable for production by headless rolling processes such as ESP and the like. The patent does not mention crack resistance when using the resistance spot welding process.

The Chinese patent document with a publication number CN113227434A and titled "High-strength galvanized steel sheet with excellent resistance spot welding performance and a manufacturing method thereof" proposes a high-strength galvanized steel sheet with a tensile strength of 490MPa or more and its manufacturing method, the composition of which is as follows by weight percentage: C: 0.05~0.15%, Si≤2.0%, Mn: 1.0~30%, acid-soluble aluminum: 3% or less, Cr: 2.5% or less, Mo: 1% or less, B: 0.005% or less, Nb: 0.2% or less, Ti: 0.2% or less, V: 0.2% or less, Sb+Sn+Bi: 0.1% or less, N: 0.01% or less, with a balance of Fe and unavoidable impurities. The main characteristic of the steel plate is that the decarburization rate in the area at a depth of 35 µm from the surface of the steel plate is 30% or more. The criterion for judging good spot welding performance is that when the current is lower than the upper limit of welding splashing of 0.5kA and 1.0kA, there is no C-type crack between the base metal plates, and the length of the B-type crack on the shoulder of the welded point is not more than 100µm. The galvanized steel plate disclosed in the patent has good resistance spot welding performance, but in the process of automobile body production, welding splashing will inevitably occur. The document does not describe how the cracks at the welded joint part are under the upper current of splashing or even higher than this current. There is still a hidden danger of serious welding cracks for body production.

In view of the above-mentioned defects of the prior art, it is expected to obtain an ultra-high-strength galvanized steel plate with better resistance to liquid metal embrittlement LME cracks, which can inhibit the generation of Type A, Type B, Type C and Type D.

### Summary

The object of the present disclosure is to provide a 100 kg grade ultra-high-strength galvanized steel plate with excellent resistance to liquid metal embrittlement LME cracks and excellent resistance spot welding performance. A further object of the present disclosure is to provide a 100 kg grade ultra-high-strength galvanized steel plate with excellent resistance spot welding performance. When the welding current is lower than the minimum current Iₛₚₗₐₛₕ at which splashing occurs, no Type B or Type C cracks will be generated, and when Type A cracks are generated, the depth of Type A cracks will not be greater than 10% of the thickness of the base metal plate; when (Iₛₚₗₐₛₕ+Iₛₚₗₐₛₕ*25%) ≥ welding current ≥ Iₛₚₗₐₛₕ, no Type B or Type C cracks will be generated, and when Type D cracks are generated, the depth of Type D cracks will not be greater than 10% of the thickness of the base metal plate.

In order to achieve the above object, the present disclosure provides a 100 Kg grade ultra-high strength galvanized steel plate, which comprises the following chemical elements by weight percentage:
C: 0.17-0.25%,
Mn: 1.7-2.7%,
Si: 0.35-1.5%,
Al: 0.01-1.0%,
0.7%≤Si+Al≤1.7%,
at least one of Nb, Ti and B,
and a balance of Fe and unavoidable impurities, wherein
the thickness of the steel plate is set to t, the resistivity R₁ of the steel plate is 0<R₁≤50µΩ·cm; in the direction from the interface between the plating layer and the steel plate matrix to the steel plate matrix, the resistivity R₂ of the steel plate in the range of 0.010 t to 0.035 t is 0<R₂≤15µΩ·cm, and the resistivity R₃ of the steel plate in the range of greater than 0.035 t to less than or equal to 0.065 t is 0<R₃≤30µΩ·cm, and they satisfy (R₂/2+R₃/3)≤(3.1R₁^{1/2}-1.5).

Another embodiment of the present disclosure is a 100 Kg grade ultra-high strength galvanized steel plate, which comprises the following chemical elements by weight percentage in addition to 94% or more of Fe and other unavoidable impurities:
C: 0.17-0.25%,
Mn: 1.7-2.7%,
Si: 0.35-1.5%,
Al: 0.01-1.0%,
0.7%≤Si+Al≤1.7%,
at least one of Nb, Ti and B,
and a balance of Fe and unavoidable impurities, wherein
the thickness of the steel plate is set to t, the resistivity R₁ of the steel plate is 0<R₁≤50µΩ·cm; in the direction from the interface between the plating layer and the steel plate matrix to the steel plate matrix, the resistivity R₂ of the steel plate in the range of 0.010 t to 0.035 t is 0<R₂≤15µΩ·cm, and the resistivity R₃ of the steel plate in the range of greater than 0.035 t to less than or equal to 0.065 t is 0<R₃≤30µΩ·cm, and they satisfy (R₂/2+R₃/3)≤(3.1R₁^{1/2}-1.5).

In the above technical solutions of the present disclosure, the chemical elements are designed according to the following specific principles:
C: C is a commonly used solution strengthening element in steel, due to its high solubility in austenite, in products of quenching-partitioning process, the carbon in martensite is enriched into residual austenite, which improves the stability of the residual austenite, so as to improve the material elongation by using the TRIP effect of the residual austenite. The ultra-high strength galvanized steel plate of the present disclosure has a tensile strength of 980MPa or more and elongation at break of 20% or more. If the C content is too low, the ultra-high strength of the material cannot be guaranteed, and at the same time a low C content is not conducive to the formation of stable residual austenite of carbon enrichment, and can also affect the elongation at break of the material. If the C content is too high, it will significantly increase the carbon equivalent, affect the resistance spot welding performance, and also more likely lead to twin crystal, increasing the crack susceptibility. Therefore, in the present disclosure, the mass percentage of C is controlled in the range of 0.17% - 0.25%.

Mn: Mn can improve the hardenability of steel, reduce the critical transition temperature, thereby improving the strength of steel. At the same time, Mn can significantly expand the austenite phase region, reduce the Ac3, Ms and Mf points, improve the austenite stability, and help to improve the elongation of steel. However, an overly high Mn content will significantly increase the carbon equivalent, which is not conducive to the resistance spot welding performance, and will also aggravate the grain roughening trend, reduce the plasticity and toughness of the steel, and deteriorate the corrosion resistance. Therefore, in the present disclosure, the mass percentage of Mn is controlled in the range of 1.7% - 2.7%.

Si: The solubility of Si in carbides is very small, which can strongly inhibit cementite precipitation, promote carbon enrichment into residual austenite, improve the stability of residual austenite, thereby improving the strength and formability of the material. However, when the Si content is too high, due to the easy formation of Si-containing oxides in the annealing process, the surface plating-ability of the steel plate becomes poor, which is not conducive to obtaining a plating layer with good quality, and the high Si content will also increase the carbon equivalent, which is not conducive to the resistance spot welding performance. Therefore, in the present disclosure, the mass percentage of Si is controlled in the range of 0.35% - 1.5%.

Al: Al has the effect of inhibiting cementite and improving the stability of residual austenite similar to Si. Al can not only improve the mechanical stability of residual austenite, but also improve the thermal stability of residual austenite. Al can also form fine and dispersed non-soluble mass points with C and N and refine the grains, so Al can partially replace Si in steel. However, the strengthening effect of Al is weaker than that of Si, and too high Al content will also cause significantly increased A_{c3} temperature of steel, which will increase the difficulty of continuous casting and the risk of steel slab cracking. Therefore, in the present disclosure, the mass percentage of Al is controlled in the range of 0.01% - 1.0%.

In the chemical composition design of the present disclosure, the mass percentage of Al and Si elements should also be controlled to meet 0.7% ≤ (Al+Si)≤ 1.7%. The reason for the control of this technical feature is as follows: an appropriate amount of Al and Si can not only ensure a certain strengthening effect, promote the stabilization of residual austenite, ensure the strength and elongation of the material, but also will not cause production difficulties due to the difficulty of continuous casting, cracking of the cast billet and the deterioration of plating ability.

Resistivity is closely related to alloying elements, crystal structure, crystal defects and solid dissolution effect. The gradient change of resistivity in the thickness direction reflects the change of structure. The low resistivity in a certain thickness direction from the surface layer can reduce the total heat input in the welding process and can advantageously prevent the formation of cracks. Therefore, in the ultra-high strength galvanized steel plate of the present disclosure, when the thickness of the steel plate is t, the resistivity R₁ of the steel plate is 0<R₁≤50µΩ·cm; in the direction from the interface between the plating layer and the steel plate matrix to the steel plate matrix, the resistivity R₂ of the steel plate in the range of 0.010t to 0.035t is 0<R₂≤15µΩ·cm, and the resistivity R3 of the steel plate in the range of greater than 0.035t to less than or equal to 0.065t is 0<R₃≤30µΩ·cm, and satisfies (R₂/2+R₃/3)≤(3.1R₁^{1/2}-1.5), wherein the ranges of R₁, R₂, R₃ and their relationships represent the average resistivity level of the steel plate and the resistivity level of the area where LME cracks are likely to occur during resistance spot welding. In particular, when 0<R₂≤15µΩ·cm, 0<R₃≤30µΩ·cm, and (R₂/2+R₃/3)≤(3.1R₁^{1/2}-1.5), it can be ensured that when the welding current is lower than Iₛₚₗₐₛₕ, no Type B or Type C cracks will be generated, and when Type A cracks are generated, the depth of Type A cracks will not be greater than 10% of the thickness of the base metal plate; when (Iₛₚₗₐₛₕ+Iₛₚₗₐₛₕ*25%) ≥ welding current ≥ Iₛₚₗₐₛₕ, no Type B or Type C cracks will be generated, and when Type D cracks are generated, the depth of Type D cracks will not be greater than 10% of the thickness of the base metal plate. If R₂>15µΩ·cm, R₃>30µΩ·cm, R₂/2+R₃/3>(3.1R₁^{1/2}-1.5), it is difficult to avoid LME cracks, especially Type C cracks. Preferably, the resistivity R₁ of the steel plate is 37µΩ·cm≤R₁≤50µΩ·cm, in the direction from the interface between the plating layer and the steel plate matrix to the steel plate matrix, the resistivity R₂ of the steel plate in the range of 0.010t to 0.035t is 9µΩ·cm≤R₂≤15µΩ·cm, and the resistivity R₃ of the steel plate in the range of greater than 0.035t to less than or equal to 0.065t is 24µΩ·cm≤R₃≤30µΩ·cm, and satisfies (R₂/2+R₃/3)≤(3.1R₁^{1/2}-1.5).

Further, in the 100 Kg grade ultra-high strength galvanized steel plate, if present, the mass percentages of Nb, Ti, B are as follows:
0<Nb≤0.1%;
0<Ti≤0.1%;
0<B≤0.003%.

Further, in the 100 Kg grade ultra-high strength galvanized steel plate, if present, the mass percentages of Nb, Ti, B are as follows:
Nb: 0.03%-0.05%;
Ti: 0.001%-0.02%;
B: 0.0002%-0.0025%.

Nb and Ti are carbide forming elements, which can inhibit cementite precipitation. Fine Nb and Ti carbides can also refine grains and improve strength, but Nb and Ti carbides are not conducive to the stabilization of residual austenite, and the addition of Nb and Ti will also increase the cost of alloy material. Therefore, the mass percentage of Nb and Ti in the present disclosure is controlled in the range of 0~0.1%.

B is prone to segregate at austenite grain boundaries, inhibit austenite transformation, improve the hardenability of steel, thereby improving the strength, but too high B content will deteriorate the formability of steel and increase the risk of cracking. Therefore, in the present disclosure, the mass percentage of B is controlled in the range of 0 - 0.003%.

Further, among other unavoidable impurities in the present disclosure, P is ≤0.015%, S is ≤0.010%, N is ≤0.008%, REM is ≤0.01%.

P, S and N are unavoidable impurity elements in steel. Too high P content will weaken the grain boundaries, increase the risk of brittle cracking, and deteriorate the welding performance. S, as an impurity element, will affect the formability and welding performance of steel. N can improve the stability of austenite and have a certain strengthening effect, but an overly high N content will increase the risk of brittleness, and it is easy to precipitate AIN, which will reduce the quality of continuous casting. Therefore, the mass percentage of P, S, N in the present disclosure is controlled to be 0.015% or less, 0.010% or less, and 0.008% or less, respectively.

REM is a general term for a class of elements, and the commonly used rare earths in steel grades are mainly La, Ce mixtures, and other rare earth elements other than La and Ce are not excluded. REM has the effect of purifying grain boundaries and metamorphosing inclusions, but the formability of the material will be damaged when its content is too high. Therefore, the mass percentage of REM in the present disclosure is controlled to be 0.01% or less.

Further, for the 100 Kg grade ultra-high strength galvanized steel plate of the present disclosure, the steel plate is configured as a GA plate or a GI plate, preferably, and the thickness of the steel plate is 0.8-2.5mm.

Further, for the 100 Kg grade ultra-high strength galvanized steel plate of the present disclosure, when Type III specimens according to ISO 6892-1 standard are stretched at room temperature perpendicularly to the rolling direction, the steel plate has a tensile strength of ≥ 980MPa, an elongation at break of ≥20%, and a hole expansion ratio of ≥ 20%.

Further, for the 100 Kg grade ultra-high strength galvanized steel plate of the present disclosure, when the steel plate is welded with 1 to 1.25 times of the Iₛₚₗₐₛₕ current, no Type B or Type C cracks will be generated, and the depth of Type D cracks is not greater than 10% of the thickness of the base metal plate if Type D cracks are generated; when the steel plate is welded with less than 1 time of the Iₛₚₗₐₛₕ current, no Type B or Type C cracks will be generated, and the depth of Type A cracks is not greater than 10% of the thickness of the base metal plate if Type A cracks are generated, wherein Iₛₚₗₐₛₕ is the minimum current at which splashing occurs.

A second aspect of the present disclosure is a manufacturing method for the above 100 Kg grade ultra-high strength galvanized steel plate, which comprises the following steps:
(1) Smelting and continuous casting to obtain a cast billet that satisfies the above composition;
(2) Hot rolling: the cast billet obtained in step (1) is heated, subjected to final rolling, laminar flow cooling and coiling to obtain a hot-rolled coil, wherein, the heating temperature of the cast billet obtained in step (1) is in the range of 1100~1300 °C, the temperature of the final rolling is controlled in the range of A_{c3}~1000 °C, the temperature of laminar flow cooling of the strip steel after final rolling is controlled in the range of (A_{c1}±45°C), and the laminar flow cooling residence time is 5~30s, and then the steel is cooled to 450~550 °C and coiled with a coiling temperature of T_{C}, and the coiled steel coil is thermally insulated in the range of (T_{C}±30°C) for 30~300min to obtain the hot-rolled coil;
(3) Pickling and cold rolling: the hot-rolled coil obtained in step (2) is pickled, cold-rolled to obtain a cold rolled coil without annealing,
(4) Continuous annealing: the cold rolled coil without annealing obtained in step (3) is subjected to a multi-stage heat treatment,
(5) Galvanizing: the strip steel obtained in step (4) enters the zinc pot at a temperature of (T_{ZP}±15°C) for galvanizing, to obtain a galvanized steel plate.

The above-mentioned multi-stage heat treatment comprises the following (a)~(d):
(a) First stage annealing: the cold rolled coil without annealing is heated to a first stage temperature (preheating temperature) in the range of not less than 600 °C ~ (A_{c1} + 40 °C)to obtain a steel coil,
(b) Second stage annealing: the steel coil obtained in (a) is further heated to a second stage temperature (heating/soaking temperature) in the range of (A_{c1}+50°C)~(A_{c3}+80°C) or (A_{c1}+50°C)~900°C, and held for 30 ~ 300s (soaking time) to obtain a strip steel, wherein the smaller value from (A_{c3}+80°C) and 900°C is taken as the upper limit of the second stage temperature range,
(c) Third stage annealing: the strip steel obtained in (b) is cooled to a third stage temperature (rapid cooling temperature) in the range of Mₛ~M_{f} at a cooling rate that is no less than a certain cooling rate V₂₋₃ and held for 10~200s (rapid cooling holding time),
(d) Fourth stage annealing, the strip steel obtained in (c) is heated again to a fourth stage temperature (reheating temperature) in the range of (350°C~T_{ZP}) and held for 15~90s (reheating time),
wherein, in step (4), the atmosphere in (a) contains 0.01-0.5% by volume of O₂, with a balance of N₂ and unavoidable impurities; the atmosphere in (b) contains at least 0.5% by volume of H₂, with a balance of N₂ and unavoidable impurities, and a dew point of -20~15 °C; in (c), V₂₋₃ represents the cooling rate, which is not less than 50°C/s, such as 50∼1000°C/s; in (d), T_{ZP} is the temperature of the zinc pot.

In the manufacturing method for the ultra-high strength galvanized steel plate of the present disclosure, in step (2), the strip steel after final rolling is cooled to the range of (A_{c1}±45°C) and held for 5~30s, in which step-cooling is conducted through the control of laminar flow cooling process, so that the hot-rolled strip steel can undergo as much ferrite phase transformation as possible during the residence time, reduce the difference in structure and properties along the plate width, and improve the plate shape quality of the strip. The coiled steel coil stays in the range of (T_{C}±30°C) for 30~300min in order to allow the strip steel to have sufficient time to undergo bainite phase transformation or pearlite phase transformation, reduce the martensite generation of hard phase, and make the strip steel have lower strength, which is conducive to cold rolling.

In the manufacturing method for the ultra-high strength galvanized steel plate of the present disclosure, the multi-stage annealing in step (4) is a quenching-partitioning process. In step (4), the first stage annealing (a) is the preheating and pre-oxidation process of the strip steel, which can inhibit the external oxidation of Si, Mn and other elements of the steel grade and promote the oxidation of Fe by controlling the O₂ content in the atmosphere. The second stage annealing (b) is a heating/soaking process, which is also an internal oxidation process, and the strip steel is heated in the austenite single-phase zone or the ferrite+austenite duplex zone by controlling the annealing temperature to obtain an appropriate proportion of austenite; By controlling the annealing atmosphere and dew point, the internal oxidation of Si, Mn and other elements occurs. The third stage annealing (c) is the quenching process, the strip is quenched to Mₛ~M_{f} at a cooling rate not lower than that of the high-hydrogen cooling method, so that the austenite generated in the heating/soaking stage is transformed into martensite + residual austenite, and the amount of martensite generated is determined by the quenching temperature. The fourth stage annealing (d) is a reheating and partitioning process, and the annealing temperature is controlled in the range of (350°C~T_{ZP}), which can not only promote the diffusion and enrichment of carbon in martensite to austenite, but also avoid the significant decrease in strength caused by drastic martensite tempering at an overly high partitioning temperature.

The strip steel obtained after the fourth stage annealing (d) in step (5) enters the zinc pot at a temperature of (T_{ZP}±15°C) for galvanizing, to obtain a galvanized steel plate, wherein, when the galvanized steel plate is hot-dip galvanized steel plate with a zinc plating layer, the steel plate with a zinc plating layer is cooled to room temperature after it is discharged from the zinc pot to obtain the final product; when the galvanized steel plate is hot-dip galvanized steel plate with a zinc iron alloy plating layer, a hot-dip galvanized steel plate with a zinc iron alloy plating layer is obtained after the strip steel is discharged from the zinc pot, and then heated for alloying. Too low alloying temperature will cause underalloying, and too high alloying temperature will cause decomposition of residual austenite due to decreased stability, affecting the elongation of the final product, so the alloying temperature is controlled at (TZP-20 °C) ~ (TZP + 35 °C). If the alloying time is too short, hot-dip galvanized steel plate with a zinc iron alloy plating layer will not have sufficient time for full alloying, and if the alloying time is too long, the iron content in the plating layer will be too high, which will deteriorate the powdering resistance of the plating layer, so the alloying time is controlled at 5~30s.

In order to obtain a better implementation effect, the final rolling temperature in step (2) is controlled to be (A_{c3}+20°C)~950°C.

In order to obtain a better implementation effect, in some preferred embodiments, in the laminar flow cooling process of the strip steel in step (2), the temperature is controlled in the range of (A_{c1}-20°C)~(A_{c1}+30°C), and the residence time of laminar flow cooling is 8~15s.

In order to obtain a better implementation effect, in some preferred embodiments, in the process of holding the strip steel after coiling in step (2), the holding time is controlled to be 60~210min.

In order to obtain a better implementation effect, in some preferred embodiments, in the second stage annealing process (b) of step (4), the second stage annealing temperature is controlled to be (A_{c1}+70°C)~(A_{c3}+80°C) or (A_{c1}+70°C)~900°C, the holding time is controlled to be 35~120s, and the smaller value from (A_{c3}+80°C) and 900°C is taken as the upper limit of the second stage temperature range.

In order to obtain a better implementation effect, in some preferred embodiments, in the second annealing stage of (b) of step (4), the atmosphere in the second stage temperature range contains 0.5~20% by volume of H₂, with a balance of N₂ and unavoidable impurities, and a dew point of -10∼10°C.

In order to obtain a better implementation effect, in some preferred embodiments, in the annealing process of step (4), the fourth stage temperature is in the range of 350°C~(T_{ZP}-35°C), and the holding time is 30~60s.

In order to obtain a better implementation effect, in some preferred embodiments, in step (5), the strip steel obtained after the fourth stage annealing (d) of step (4) is further heated and enters the zinc pot at a temperature of (T_{ZP}±10°C).

In order to obtain a better implementation effect, in some preferred embodiments, in step (5) of galvanizing, the alloying temperature is in the range of (T_{ZP}-10°C)~(T_{ZP}+25°C), and the holding time is 10~20s.

The 100 kg grade ultra-high-strength galvanized steel plate with excellent resistance spot welding performance according to the present disclosure and the manufacturing method therefor have the following advantages and beneficial effects compared with the prior art:
(1) For the 100 kg grade ultra-high-strength galvanized steel plate, the present disclosure inhibits the occurrence of LME cracks in the resistance spot welding process for the first time by limiting the resistivity of different areas in the thickness direction of the steel plate and the average resistivity of the steel plate and obtains the ultra-high-strength galvanized steel plate with excellent resistance spot welding performance.
(2) For the 100 kg grade ultra-high-strength galvanized steel plate of the present disclosure, when the welding current is lower than the minimum current Iₛₚₗₐₛₕ at which splashing occurs, no Type B or Type C cracks will be generated, and when Type A cracks are generated, the depth of Type A cracks will not be greater than 10% of the thickness of the base metal plate; when (Iₛₚₗₐₛₕ+Iₛₚₗₐₛₕ*25%) ≥ welding current ≥ Iₛₚₗₐₛₕ, no Type B or Type C cracks will be generated, and when Type D cracks are generated, the depth of Type D cracks will not be greater than 10% of the thickness of the base metal plate.
(3) The composition of the ultra-high-strength galvanized steel plate of the present disclosure is simple. Through the precise control of laminar flow cooling during hot rolling, hot-rolling, coiling and thermal insulation, and continuous annealing process, the obtained steel plate having a tensile strength of ≥980MPa, an elongation at break of ≥20%, and a hole expansion ratio of ≥20% has excellent resistance spot welding performance.
(4) The process equipment required for the production of ultra-high strength galvanized steel plate of the present disclosure is simple and can realize stable production in batch. The comprehensive properties of the material make it able to meet the manufacture of body parts with complex shapes, and the material has excellent resistance spot welding performance and corrosion resistance.

### Description of the drawings

Fig. 1 schematically shows the relative positions of the four kinds of resistance spot welding LME cracks of the present disclosure.
Fig. 2 illustratively shows the change of microstructure of the steel plate of the present disclosure in the thickness direction.

### Detailed Description

Specific embodiments will be further explained and illustrated below with reference to the specific Examples. However, such explanation and illustration do not constitute any improper limitation on the technical solution of the present disclosure.

In the present disclosure, "galvanizing" refers to hot-dip zinc galvanizing or hot-dip zinc iron alloy galvanizing.

In the present disclosure, A_{c1} refers to the temperature at which the pearlite transforms into austenite when heated, and the unit is °C.

In the present disclosure, A_{c3} refers to the final temperature of transforming into austenite when heated, and the unit is °C.

In the present disclosure, T_{C} refers to the coiling temperature in step (2), and the unit is °C.

In the present disclosure, Mₛ is the temperature at which "martensite" appears, and M_{f} is the temperature of full martensitization, and the unit is °C.

In the present disclosure, T_{ZP} represents the zinc pot temperature, and the unit is °C.

In the present disclosure, V₂₋₃ represents the cooling rate.

### Examples 1-14 and Comparative Examples 1-2

Table 1 lists the mass percentages of the various chemical elements of the ultra-high-strength galvanized steel plates of Examples 1-14 and the galvanized steel plates of Comparative Examples 1-2.

**Table 1 (wt%, the balance is Fe and other unavoidable impurities except P, S and N)**

| Steel grade | Chemical elements | | | | | | | | | | | | | | | |
|---|---|---|---|---|---|---|---|---|---|---|---|---|---|---|---|---|
| | C | Si | Mn | P | S | Al | Nb | Ti | B | N | REM | Cr | Mo | Sb | Ac1 | Ac3 |
| A | 0.170 | 1.15 | 2.25 | 0.008 | 0.0005 | 0.45 | 0.03 | 0.018 | 0.0025 | 0.007 | 0.0091 | - | - | - | 707 | 881 |
| B | 0.183 | 0.82 | 2.50 | 0.012 | 0.0003 | 0.71 | - | 0.020 | - | 0.004 | - | - | - | - | 704 | 883 |
| C | 0.198 | 0.98 | 1.98 | 0.015 | 0.0011 | 0.63 | 0.05 | - | - | 0.004 | 0.0035 | - | - | - | 717 | 896 |
| D | 0.215 | 1.5 | 1.72 | 0.009 | 0.0007 | 0.01 | - | 0.001 | 0.0005 | 0.005 | - | - | - | - | 721 | 838 |
| E | 0.229 | 0.77 | 2.35 | 0.010 | 0.0009 | 0.93 | - | - | 0.0002 | 0.003 | - | - | - | - | 715 | 894 |
| F | 0.242 | 0.48 | 2.66 | 0.012 | 0.0012 | 1.00 | - | 0.006 | 0.0018 | 0.006 | - | - | - | - | 707 | 878 |
| G | 0.250 | 0.35 | 2.44 | 0.010 | 0.0005 | 0.88 | 0.04 | - | 0.001 | 0.005 | - | - | - | - | 708 | 866 |
| CEx.1 | 0.17 | 1.45 | 2.66 | 0.0100 | 0.0029 | 0.031 | 0 | 0.020 | ***0*** | - | - | ***0.60*** | ***0.06*** | ***0.05*** | 713 | 814 |
| CEx.2 | ***0.12*** | 1.0 | ***7.0*** | 0.0064 | 0.0055 | ***1.5*** | - | ***0*** | - | - | - | - | - | - | 612 | 839 |

The ultra-high-strength galvanized steel plates of Examples 1-14 were prepared by the following steps:
(1) Smelting and continuous casting to obtain a cast billet that satisfies the above composition of the present disclosure;
(2) Hot rolling: the cast billet obtained in step (1) was heated in the range of 1100~1300 °C, subjected to final rolling in the range of A_{c3}~1000 °C; the strip steel after final rolling was cooled to the range of (A_{c1}±45°C), and the laminar flow cooling residence time was 5~30s, then cooled to 450~550 °C and coiled with a coiling temperature of T_{C}, and the coiled steel coil is kept in the range of (T_{C}±30°C) for 30~300min to obtain the hot-rolled coil;
(3) Pickling and cold rolling: the hot-rolled coil obtained in step (1) was pickled, cold-rolled to obtain a cold rolled coil without annealing,
(4) Continuous annealing: the cold rolled coil without annealing obtained in step (3) was subjected to a multi-stage heat treatment,
   (a) First stage annealing: the cold rolled coil without annealing was heated to a first stage temperature in the range of not less than 600 °C ~ (A_{c1} + 40 °C) to obtain a steel coil,
   (b) Second stage annealing: the steel coil obtained in (a) is further heated to a second stage temperature in the range of (A_{c1}+50°C)~(A_{c3}+80°C) or (A_{c1}+50°C)~900°C, and held for 30 ~ 300s to obtain a strip steel,
   (c) Third stage annealing: the strip steel obtained in (b) was cooled to a third stage temperature in the range of Mₛ~M_{f} at a cooling rate that is no less than a certain cooling rate V₂₋₃ and held for 10~200s;
   (d) Fourth stage annealing: the strip steel obtained in (c) was heated again to a fourth stage temperature in the range of (350°C~T_{ZP}) and held for 15~90s,
   wherein, in step (4), the atmosphere in (a) contained 0.01∼0.5% by volume of O₂, with a balance of N₂ and unavoidable impurities; the atmosphere in (b) contained at least 0.5% by volume of H₂, with a balance of N₂ and unavoidable impurities, and a dew point of -20~15 °C; the smaller value from (A_{c3}+80°C) and 900°C was taken as the upper limit of the second stage temperature range; in (c), V₂₋₃ represented the cooling rate, which was not less than 50°C/s; in (d), T_{ZP} was the temperature of the zinc pot;
(5) Galvanizing: the strip steel obtained after the fourth stage annealing (d) in step (4) entered the zinc pot at a temperature of (T_{ZP}±15°C) for galvanizing, to obtain a galvanized steel plate, wherein, when the galvanized steel plate was a hot-dip galvanized steel plate with a zinc plating layer, the steel plate with a zinc plating layer was cooled to room temperature after it was discharged from the zinc pot, and when the galvanized steel plate was a hot-dip galvanized steel plate with a zinc iron alloy plating layer, the hot-dip galvanized steel plate with a zinc iron alloy plating layer was thermally insulated in the range of (T_{ZP}-20°C)~(T_{ZP}+35°C) for 5~60s for alloying, and then cooled to room temperature..

Tables 2-1 and 2-2 list the specific process parameters for the ultra-high-strength galvanized steel plates of Examples 1-14 and the galvanized steel plates of Comparative Examples 1-2.

**Table 2-1**

| No. | Ingredient | Heating temperature/°C | Final rolling temperature/°C | Laminar flow cooling insulation temperature /°C | Laminar cooling residence time /s | Coiling temperature /°C | Holding time after coiling /min |
|---|---|---|---|---|---|---|---|
| Ex.1 | A | 1240 | 920 | 730 | 5 | 550 | 30 |
| Ex.2 | A | 1230 | 920 | 720 | 8 | 520 | 90 |
| Ex.3 | B | 1250 | 940 | 720 | 10 | 520 | 120 |
| Ex.4 | B | 1230 | 910 | 710 | 9 | 510 | 150 |
| Ex.5 | C | 1220 | 900 | 710 | 12 | 490 | 210 |
| Ex.6 | C | 1200 | 900 | 710 | 9 | 470 | 240 |
| Ex.7 | D | 1270 | 950 | 710 | 11 | 510 | 180 |
| Ex.8 | D | 1260 | 940 | 690 | 15 | 530 | 60 |
| Ex.9 | E | 1230 | 910 | 680 | 13 | 450 | 300 |
| Ex.10 | E | 1210 | 900 | 690 | 16 | 470 | 270 |
| Ex. 11 | F | 1200 | 900 | 670 | 21 | 510 | 120 |
| Ex.12 | F | 1150 | 880 | 665 | 28 | 490 | 210 |
| Ex.13 | G | 1230 | 910 | 680 | 15 | 510 | 180 |
| Ex.14 | G | 1190 | 890 | 670 | 25 | 520 | 120 |

**Table 2-2**

| No. | Ingredient | Plating layer | Preheating temperature (first stage) /°C | heating/ soaking temperature (second stage)/ °C | Soaking time /s | dew point /°C | Rapid cooling temperature (third stage) /°C | Rapid cooling holding time /s | Reheating temperature (fourth stage) /°C | Reheating holding time /s | Temperature for entering zinc pot;/°C | Zinc pot temperature /°C | Alloying temperature /°C | Alloying time /s |
|---|---|---|---|---|---|---|---|---|---|---|---|---|---|---|
| Ex.1 | A | GI | 720 | 870 | 30 | 10 | 290 | 185 | 350 | 45 | 455 | 460 | | |
| Ex.2 | A | GA | 700 | 860 | 50 | 8 | 275 | 155 | 420 | 55 | 455 | 460 | 490 | 5 |
| Ex.3 | B | GA | 690 | 850 | 60 | 3 | 270 | 140 | 370 | 70 | 455 | 455 | 475 | 15 |
| Ex.4 | B | GI | 700 | 860 | 45 | 0 | 250 | 120 | 390 | 65 | 460 | 458 | | |
| Ex.5 | C | GI | 730 | 880 | 35 | 7 | 280 | 100 | 420 | 45 | 460 | 462 | | |
| Ex.6 | C | GA | 710 | 840 | 95 | 5 | 230 | 60 | 390 | 60 | 460 | 465 | 480 | 20 |
| Ex.7 | D | GA | 670 | 810 | 300 | 15 | 210 | 15 | 360 | 90 | 455 | 460 | 490 | 10 |
| Ex.8 | D | GI | 685 | 835 | 120 | 12 | 245 | 35 | 410 | 35 | 460 | 461 | | |
| Ex.9 | E | GI | 690 | 830 | 145 | 0 | 225 | 55 | 410 | 35 | 465 | 458 | | |
| Ex.10 | E | GA | 680 | 840 | 100 | -5 | 230 | 70 | 390 | 55 | 465 | 462 | 465 | 45 |
| Ex.11 | F | GA | 710 | 860 | 85 | -12 | 270 | 120 | 440 | 15 | 465 | 460 | 455 | 55 |
| Ex.12 | F | GI | 700 | 850 | 100 | -18 | 250 | 60 | 455 | 75 | 455 | 464 | | |
| Ex.13 | G | GA | 670 | 825 | 180 | -7 | 215 | 45 | 370 | 90 | 460 | 465 | 465 | 30 |
| Ex.14 | G | GI | 720 | 850 | 90 | -2 | 220 | 60 | 400 | 60 | 460 | 461 | | |

| | | | | | | | | | | | | | | |
|---|---|---|---|---|---|---|---|---|---|---|---|---|---|---|
| GI: the plating layer is pure zinc layer, GA: the plating layer is zinc-iron alloy. | | | | | | | | | | | | | | |

The ultra-high-strength galvanized steel plates of Examples 1-14 were tested for mechanical properties and resistance spot welding performance, and the obtained test results are listed in Table 3.

The following methods were used to determine the mechanical properties, resistivity and resistance spot welding performance:
Mechanical properties: the test sample was stretched and processed in accordance with the requirements of Type III specimen in the ISO 6892-1 standard perpendicularly to the rolling direction of the steel plate, and the tensile strength TS and elongation at break EL were determined by stretching the sample at room temperature. It should be emphasized that, due to the difference in measurement methods and the difference in the geometric dimensions of the specimens, there is a difference between the elongation at break measured according to the ISO 6892-1 standard and the elongation at break measured according to the JIS Z2241 standard, GB/T 228.1 standard, and the differences in the measured value of the elongation at break due to the difference between the reference standards all belong to the protection scope of the ultra-high-strength galvanized steel plate of the present disclosure.

Hole expansion ratio: the sample was processed according to the ISO 16630 standard, and the hole expansion ratio was detected at room temperature according to the requirements of the standard to determine the hole expansion ratio HER. It should be emphasized that, due to the difference in measurement methods and the difference in the geometric dimensions of the specimens, there is a difference between the hole expansion ratio measured according to the ISO 16630 standard and the hole expansion ratio measured according to the JFS T1001 standard, GB/T 15825.4 standard, and the differences in the measured value of the hole expansion ratio caused by the difference between the reference standards all belong to the protection range of the ultra-high strength galvanized steel plate of the present disclosure.

Resistivity: a steel plate having a certain area was taken and processed by processing methods including but not limited to grinding machine, wire-electrode cutting, milling machine, etc. The full thickness of the steel plate was taken as t, and the sample in the range of 0.010t to 0.035t and from greater than 0.035t to less than or equal to 0.065t in the direction of the steel plate matrix was taken and detected for the resistivity R₁, R₂, R₃ of the sample with a resistivity measuring equipment.

LME cracks: the welded joints were cut and polished, corroded and the cross sections of the welded joints were observed by a microscope (usually an optical microscope) at a certain magnification to determine the length of different types of cracks on the observed welded joints.

**Table 3**

| No. | Plating layer | thickness/mm | TS/ MPa | TEL/ % | HER/ % | R₁/µΩ·cm | R₂/µΩ·cm | R₃/µΩ·cm | Welding current (kA) | Iₛₚₗₐₛₕ(kA) | Type A/µm | Type B/µm | Type C/µm | Type D/µm |
|---|---|---|---|---|---|---|---|---|---|---|---|---|---|---|
| Ex.1 | GI | 1.6 | 1039 | 21.2 | 26 | 37.7 | 9.7 | 24.5 | Iₛₚₗₐₛₕ | 9.2 | 95.0 | N/D | N/D | 96.5 |
| Ex.2 | GA | 1.6 | 1023 | 22.5 | 28 | 38 | 9.7 | 24.7 | Iₛₚₗₐₛₕ+Iₛₚₗₐₛₕ*5% | 9.6 | 44.9 | N/D | N/D | 43.7 |
| Ex.3 | GA | 1.6 | 1006 | 23.4 | 35 | 41 | 10.1 | 25.2 | Iₛₚₗₐₛₕ+Iₛₚₗₐₛₕ*20% | 10.5 | 66.7 | N/D | N/D | 33.8 |
| Ex.4 | GI | 1.6 | 1045 | 22.4 | 29 | 41 | 10.5 | 25.5 | Iₛₚₗₐₛₕ+Iₛₚₗₐₛₕ*15% | 10.3 | 80.2 | N/D | N/D | N/D |
| Ex.5 | GI | 1.6 | 1056 | 22.1 | 21 | 39 | 9.8 | 24 | Iₛₚₗₐₛₕ*80% | 11.5 | N/D | N/D | N/D | N/D |
| Ex.6 | GA | 1.6 | 1005 | 24.7 | 22 | 39.5 | 9.8 | 25.8 | Iₛₚₗₐₛₕ+Iₛₚₗₐₛₕ*25% | 11.4 | 92.3 | N/D | N/D | 79.5 |
| Ex.7 | GA | 1.6 | 989 | 25.1 | 27 | 38.6 | 9 | 26.7 | Iₛₚₗₐₛₕ | 8.8 | 110.5 | N/D | N/D | 122.7 |
| Ex.8 | GI | 1.6 | 1012 | 22.2 | 31 | 39 | 9 | 26.8 | Iₛₚₗₐₛₕ | 8.5 | 56.4 | N/D | N/D | 75.5 |
| Ex.9 | GI | 1.6 | 992 | 23.6 | 31 | 44 | 12.3 | 28 | Iₛₚₗₐₛₕ+Iₛₚₗₐₛₕ*25% | 9.5 | N/D | N/D | N/D | 82.1 |
| Ex.10 | GA | 1.6 | 1007 | 22.8 | 29 | 44.3 | 12.6 | 28.1 | Iₛₚₗₐₛₕ+Iₛₚₗₐₛₕ*25% | 9.5 | N/D | N/D | N/D | 20.3 |
| Ex. 11 | GA | 1.6 | 1034 | 20.2 | 33 | 45.4 | 13.5 | 29 | Iₛₚₗₐₛₕ+Iₛₚₗₐₛₕ*10% | 10.6 | 67.4 | N/D | N/D | N/D |
| Ex.12 | GI | 1.6 | 998 | 24.3 | 37 | 46 | 14 | 29 | Iₛₚₗₐₛₕ | 10.5 | 93.0 | N/D | N/D | N/D |
| Ex.13 | GA | 1.6 | 1006 | 22.1 | 35 | 45 | 13.1 | 28.3 | Iₛₚₗₐₛₕ | 9.8 | 20.6 | N/D | N/D | 15.1 |
| Ex.14 | GI | 1.6 | 990 | 22.6 | 29 | 44.3 | 12.7 | 28.1 | Iₛₚₗₐₛₕ+Iₛₚₗₐₛₕ*15% | 10.2 | 58.2 | N/D | N/D | N/D |

| | | | | | | | | | | | | | | |
|---|---|---|---|---|---|---|---|---|---|---|---|---|---|---|
| TS: tensile strength, TEL: elongation at break, HER: hole expansion ratio, N/D: Not detected. | | | | | | | | | | | | | | |

The resistance spot welding performance test of the galvanized steel plate of Comparative Examples 1-2 was carried out, and the test results obtained are listed in Table 4.

**Table 4**

| No. | Plating layer | thickness/mm | Welding current (kA) | Iₛₚₗₐₛₕ(kA) | Type A/ µm | Type B/ µm | Type C/ µm | Type D/ µm |
|---|---|---|---|---|---|---|---|---|
| CEx.1 | GI | - | Iₛₚₗₐₛₕ-0.5kA | 9.0 | 460 | | | |
| CEx.2 | GI | 1.41 | Iₛₚₗₐₛₕ-0.5kA | 8.3 | N/D | - | N/D | 535 |

As can be seen from Table 1-3, the chemical elements of the steel grade used in Examples 1-14 of the present disclosure satisfied the requirement of the present disclosure. Therefore, the ultra-high-strength galvanized steel plate obtained by the method of the present disclosure had a tensile strength of ≥ 980MPa, an elongation at break of ≥ 20%, a hole expansion ratio of ≥ 20%, and the resistivity satisfied the present disclosure. Therefore, when the steel plates of Examples 1-14 were subjected to resistance spot welding with a current in the range of Iₛₚₗₐₛₕ~ Iₛₚₗₐₛₕ+Iₛₚₗₐₛₕ*25%, no Type B or Type C LME cracks were generated, and Type D LME cracks did not appear or when Type D LME cracks appeared, the length of Type D cracks was not greater than 10% of the thickness of the base metal plate. For example, in Example 7, where the length of the Type D type LME cracks was the longest in examples, the length of the Type D type cracks was 7.6% of the thickness of the base metal.

In contrast, Comparative Example 1 and Comparative Example 2 are existing steel plates, which were not produced by the manufacturing method of the steel plates of the present disclosure. The chemical elements B and Cr, Mo, Sb in the steel grade of Comparative Example 1 did not satisfy the present disclosure, and the result was that four kinds of cracks of Type A, Type B, Type C and Type D appeared in the steel plate of Comparative Example 1 when the resistance spot welding was carried out, and the resistance spot welding performance was poor.

The contents of the steel elements C, Mn, Al, Ti used in Comparative Example 2 were different from those of the present disclosure. When the steel plate obtained in Comparative Example 2 was subjected to resistance spot welding, although Type C LME cracks did not appear, the length of Type D cracks was 37.9% of the thickness of the base metal plate. The length of Type D cracks generated in the steel plate of Comparative Example 2 was much greater than the length of Type D cracks generated in the base metal in examples of the present disclosure. The Type D cracks generated in the steel plate of Comparative Example 2 had a greater influence on the base metal, and the resistance spot welding performance is poor.

In the present disclosure, the LME cracks of the ultra-high-strength galvanized steel plate obtained in Examples 1-14 has been suppressed by optimizing the chemical elements and controlling the manufacturing process, and the resistance spot welding performance is excellent.

Based on the above, for the 100 kg grade ultra-high-strength galvanized steel plate, the present disclosure inhibits the occurrence of LME cracks in the resistance spot welding process by limiting the resistivity of different areas in the thickness direction of the steel plate and the average resistivity of the steel plate and obtains the ultra-high-strength galvanized steel plate with excellent resistance spot welding performance. When the welding current is lower than the minimum current Iₛₚₗₐₛₕ at which splashing occurs, no Type B or Type C cracks will be generated, and when Type A cracks are generated, the depth of Type A cracks will not be greater than 10% of the thickness of the base metal plate; when (Iₛₚₗₐₛₕ+Iₛₚₗₐₛₕ*25%) ≥ welding current ≥ Iₛₚₗₐₛₕ, no Type B or Type C cracks will be generated, and when Type D cracks are generated, the depth of Type D cracks will not be greater than 10% of the thickness of the base metal plate. The composition of the ultra-high-strength galvanized steel plate of the present disclosure is simple. Through precise control of laminar flow cooling during hot rolling, hot-rolling, coiling and thermal insulation, and the continuous annealing process, the obtained steel plate having a tensile strength of ≥980MPa, an elongation at break of ≥20%, and a hole expansion ratio of ≥20% has excellent resistance spot welding performance. The process equipment required for the production of ultra-high strength galvanized steel plate of the present disclosure is simple and can realize stable production in batch. The comprehensive properties of the material make it able to meet the manufacture of body parts with complex shapes, and the material has excellent resistance spot welding performance and corrosion resistance. The 100 kg grade ultra-high-strength galvanized steel plate in the present disclosure has excellent resistance to liquid metal embrittlement LME cracks and resistance spot welding performance, can be effectively applied to the manufacture of automobile body structure, meets the current development needs of automotive steel for automobile lightweight and safety, and has broad application prospects.

It should be noted that the prior art of the protection scope of the present disclosure is not limited to the examples given in the application documents, and all prior arts that do not conflict with the solution of the present disclosure, including but not limited to prior patent documents, prior publications, prior public use, etc., can be included in the protection scope of the present disclosure. In addition, combinations of the various technical features in this case are not limited to the combinations described in the claims of this case or the combinations described in the specific Examples. All technical features recorded in this case can be combined freely or associated in any way unless a contradiction occurs.

It should also be noted that the examples listed above are only specific embodiments of the present disclosure. Obviously, the present disclosure is not limited to the above examples, and changes or modifications made thereto can be directly derived from the present disclosure or easily conceived of by those skilled in the art, all of which fall within the protection scope of the present disclosure.

## Claims

1. A 100 Kg grade ultra-high strength galvanized steel plate, which comprises the following chemical elements by weight percentage:
C: 0.17-0.25%,
Mn: 1.7-2.7%,
Si: 0.35-1.5%,
Al: 0.01-1.0%,
0.7%≤Si+Al≤1.7%,
at least one of Nb, Ti and B,
and a balance of Fe and unavoidable impurities, wherein
the thickness of the steel plate is set to t, the resistivity R₁ of the steel plate is 0<R₁≤50µΩ·cm; in the direction from the interface between the plating layer and the steel plate matrix to the steel plate matrix, the resistivity R₂ of the steel plate in the range of 0.010 t to 0.035 t is 0<R₂≤15µΩ·cm, and the resistivity R₃ of the steel plate in the range of greater than 0.035 t to less than or equal to 0.065 t is 0<R₃≤30µΩ·cm, and they satisfy (R₂/2+R₃/3)≤(3.1R₁^{1/2}-1.5).

2. The 100 Kg grade ultra-high strength galvanized steel plate according to claim 1, wherein the mass percentages of Nb, Ti, B are as follows:
0<Nb≤0.1%;
0<Ti≤0.1%;
0<B≤0.003%.

3. The 100 Kg grade ultra-high strength galvanized steel plate according to claim 1, wherein it comprises, by mass percentage, among other unavoidable impurities:
P≤0.015%;
S≤0.010%;
N≤0.008%;
REM≤0.01%.

4. The 100 Kg grade ultra-high strength galvanized steel plate according to claim 1, wherein it comprises at least one of the following components by mass percentage:
Nb: 0.03%-0.05%;
Ti: 0.001%-0.02%;
B: 0.0002%-0.0025%.

5. The 100 Kg grade ultra-high strength galvanized steel plate according to claim 1, wherein the thickness of the steel plate is set to t, the resistivity R₁ of the steel plate is 37µΩ·cm≤R₁≤50µΩ·cm, in the direction from the interface between the plating layer and the steel plate matrix to the steel plate matrix, the resistivity R₂ of the steel plate in the range of 0.010t to 0.035t is 9µΩ·cm≤R₂≤15µΩ·cm, and the resistivity R₃ of the steel plate in the range of greater than 0.035t to less than or equal to 0.065t is 24µΩ·cm≤R₃≤30µΩ·cm, and satisfies (R₂/2+R₃/3)≤(3.1R₁^{1/2}-1.5).

6. The 100 Kg grade ultra-high strength galvanized steel plate according to claim 1, wherein the steel plate is configured as a GA plate or a GI plate, preferably, and the thickness of the steel plate is 1-2mm.

7. The 100 Kg grade ultra-high strength galvanized steel plate according to claim 1, wherein when Type III specimens according to ISO 6892-1 standard are stretched at room temperature perpendicularly to the rolling direction, the steel plate has a tensile strength of ≥ 980MPa, an elongation at break of ≥20%, and a hole expansion ratio of ≥ 20%.

8. The 100 Kg grade ultra-high strength galvanized steel plate according to claim 1, wherein when the steel plate is welded with 1 to 1.25 times of the Iₛₚₗₐₛₕ current, no Type B or Type C cracks will occur, and the depth of Type D cracks is not greater than 10% of the thickness of the base metal plate if Type D cracks are generated; when the steel plate is welded with 1 time or less of the Iₛₚₗₐₛₕ current, no Type B or Type C cracks will occur, and the depth of Type A cracks is not greater than 10% of the thickness of the base metal plate if Type A cracks are generated, wherein Iₛₚₗₐₛₕ is the minimum current at which splashing occurs.

9. A manufacturing method for the 100 Kg grade ultra-high strength galvanized steel plate according to any one of claims 1-8, which comprises the following steps:
(1) Smelting and continuous casting to obtain a cast billet that satisfies the above composition of the steel plate according to any one of claims 1-4;
(2) Hot rolling: the cast billet obtained in step (1) is heated, subjected to final rolling, laminar flow cooling and coiling to obtain a hot-rolled coil;
(3) Pickling and cold rolling: the hot-rolled coil obtained in step (2) is pickled, cold-rolled to obtain a cold rolled coil without annealing;
(4) Continuous annealing: the cold rolled coil without annealing obtained in step (3) is subjected to a multi-stage heat treatment;
(5) Galvanizing: the strip steel obtained in step (4) enters the zinc pot at a temperature of (zinc pot temperature T_{ZP}±15°C) for galvanizing, to obtain a galvanized steel plate.

10. The manufacturing method for the 100 Kg grade ultra-high strength galvanized steel plate according to claim 9, wherein the multi-stage heat treatment comprises the following (a)~(d):
(a) First stage annealing: the cold rolled coil without annealing is heated to a first stage temperature in the range of not less than 600 °C ~ (A_{c1} + 40 °C) to obtain a steel coil,
(b) Second stage annealing: the steel coil obtained in (a) is further heated to a second stage temperature in the range of (A_{c1}+50°C)~(A_{c3}+80°C) or (A_{c1}+50°C)~900°C, and held for 30 ~ 300s to obtain a strip steel, wherein the smaller value from (A_{c3}+80°C) and 900°C is taken as the upper limit of the second stage temperature range,
(c) Third stage annealing: the strip steel obtained in (b) is cooled to a third stage temperature in the range of Mₛ~M_{f} at a cooling rate that is not less than a certain cooling rate V₂₋₃ and held for 10~200s,
(d) Fourth stage annealing, the strip steel obtained in (c) is heated again to a fourth stage temperature in the range of (350°C~ zinc pot temperature) and held for 15~90s,
wherein A_{c1} is the temperature at which the pearlite transforms into austenite when heated, A_{c3} is the final temperature of transforming into austenite when heated, Mₛ is the temperature at which martensite appears, and M_{f} is the temperature of full martensitization, V₂₋₃ represents the cooling rate, which is not less than 50°C/s.

11. The manufacturing method for the 100 Kg grade ultra-high strength galvanized steel plate according to claim 10, wherein
in (b), the second stage annealing temperature is controlled to be (A_{c1}+70°C)~(A_{c3}+80°C) or (A_{c1}+70°C)~900°C, the holding time is controlled to be 35~120s, and the smaller value from (A_{c3}+80°C) and 900°C is taken as the upper limit of the second stage temperature range; and/or in (d), the fourth stage temperature is in the range of 350°C~(T_{ZP}-35°C), and the holding time is 30~60s.

12. The manufacturing method for the 100 Kg grade ultra-high strength galvanized steel plate according to claim 9, wherein, in step (4), the atmosphere in (a) contains 0.01 -0.5% by volume of O₂, with a balance of N₂ and unavoidable impurities; the atmosphere in (b) contains at least 0.5% by volume of H₂, with a balance of N₂ and unavoidable impurities, and a dew point of -20~15 °C; preferably, the atmosphere in the second stage temperature range contains 0.5~20% by volume of H₂, with a balance of N₂ and unavoidable impurities, and a dew point of -10∼10°C.

13. The manufacturing method for the 100 Kg grade ultra-high strength galvanized steel plate according to claim 9, wherein
in step (2),
the heating temperature is in the range of 1100~1300 °C,
the temperature of the final rolling is in the range of A_{c3}~1000 °C,
the holding temperature of laminar flow cooling is in the range of (A_{c1}±45°C), and the laminar flow cooling residence time is 5~30s, and then the steel is cooled to 450~550 °C and coiled, and the coiled steel coil is thermally insulated in the range of (a coiling temperature of T_{C}±30°C) for 30~300min;
preferably, the temperature of the final rolling is (A_{c3}+20°C)~950°C;
preferably, in the laminar flow cooling process of the strip steel, the temperature is controlled in the range of (A_{c1}-20°C)~(A_{c1}+30°C), and the laminar flow cooling residence time is 8~15s; preferably, in the process of holding the strip steel after coiling, the holding time is controlled to be 60~210min.

14. The manufacturing method for the 100 Kg grade ultra-high strength galvanized steel plate according to claim 9, wherein in step (5), when the galvanized steel plate is a hot-dip galvanized steel plate with a zinc plating layer, the steel plate with a zinc plating layer is cooled to room temperature after it is discharged from the zinc pot; when the galvanized steel plate is a hot-dip galvanized steel plate with a zinc iron alloy plating layer, the hot-dip galvanized steel plate with a zinc iron alloy plating layer is thermally insulated in the range of (zinc pot temperature T_{ZP}-20°C)~(zinc pot temperature T_{ZP}+35°C) for 5~60s for alloying after it is discharged from the zinc pot, and then cooled to room temperature.

15. The manufacturing method for the 100 Kg grade ultra-high strength galvanized steel plate according to claim 9, wherein, in step (5), the strip steel enters the zinc pot at a temperature of (T_{ZP}±10°C), and is alloyed at a temperature in the range of (T_{ZP}-10°C)~(T_{ZP}+25°C), and the holding time is 10~20s.
